# EUROPÄISCHE PATENTANMELDUNG

(11) **EP 3 015 831 A1**
(43) Veröffentlichungstag der Anmeldung: **04.05.2016**
(21) Anmeldenummer: 15191659.0
(22) Anmeldetag: 27.10.2015
(51) Int. Cl.: G01G 19/44

(54) **VERFAHREN ZUR GEWICHTSANZEIGE BEI EINER GEWICHTSMESSEINRICHTUNG**

(30) Priorität: 03.11.2014 DE 102014222393
(71) Anmelder: BSH Hausgeräte GmbH, 81739 München (DE)
(72) Erfinder: Kochan, Alex, 83358 Seebruck (DE); Mayerhofer, Lukas, 83547 Babensham (DE)

(57) **Zusammenfassung**

Die vorliegende Erfindung betrifft ein Verfahren zur Gewichtsanzeige (15) bei einer Gewichtsmesseinrichtung (1), insbesondere bei einer Körperwaage (1'), wobei bei einer ersten Gewichtsmessung (9) ein erstes Gewicht (10) und bei einer zweiten Gewichtsmessung (12) ein zweites Gewicht (13) bestimmt werden. Erfindungswesentlich ist dabei, dass nach der zweiten Gewichtsmessung (12) eine Summe aus dem zweiten Gewicht (13) und einer Korrektur (17) angezeigt wird, wobei die Korrektur (17) von einer Differenz (19) zwischen dem ersten Gewicht (10) und dem zweiten Gewicht (13) abhängt.

Die Erfindung betrifft ferner eine solche Gewichtsmesseinrichtung (1).

## Beschreibung

Die vorliegende Erfindung betrifft ein Verfahren zur Gewichtsanzeige bei einer Gewichtsmesseinrichtung, insbesondere bei einer Körperwaage. Die Erfindung betrifft des Weiteren eine solche Gewichtsmesseinrichtung.

Eine Gewichtsmesseinrichtung dient dem Zweck, das Gewicht eines Gegenstandes oder einer Person zu bestimmen und anzuzeigen. Die Genauigkeit der Gewichtserfassung und deren Anzeige hängen von einer Vielzahl von Faktoren ab. Dabei ist es insbesondere bei Gewichtsmesseinrichtungen mit einer digitalen Anzeige möglich, das erfasste Gewicht sehr genau anzuzeigen. So besteht etwa die Möglichkeit, bei einer Gewichtsanzeige in Kilogramm, das Gewicht auf eine oder zwei Nachkommastellen genau, d.h. auf 100 g oder 10 g genau anzuzeigen. Bei einer derartig genauen Anzeige kommt es bei der Gewichtserfassung ein und derselben Person innerhalb kürzester Zeit zu Schwankungen des erfassten Gewichts, die insbesondere durch Messtoleranzen der Gewichtsmesseinrichtung oder Gewichtsänderungen der Person verursacht sein können. So kann beispielsweise das Gewicht der gewogenen Person innerhalb der aufeinanderfolgenden Gewichtsmessungen schwanken, wobei diese Schwankungen beispielsweise durch Gewichtszu- oder -abnahme bedingt sein können. Um eine Abweichung der Gewichtsanzeige bei aufeinanderfolgenden Wägungen der gleichen Person zu vermeiden, ist es vorstellbar, eine als "Memory effect" geläufige Funktion zu verwenden. Bei dieser Funktion wird das zuletzt erfasste und angezeigte Gewicht in einem Messwertspeicher gespeichert. Wird bei einer nachfolgenden Gewichtserfassung ein Gewicht bestimmt, das in einer Bandbreite des zuletzt gemessenen Gewichts liegt, so wird das zuletzt gemessene Gewicht angezeigt. Somit wird zwar eine Schwankung der Gewichtsanzeige vermieden. Nachteilig hierbei ist jedoch, dass die Genauigkeit der Gewichtsanzeige reduziert wird. Mitunter kann ein falsches Gewicht angezeigt werden.

Die vorliegende Erfindung beschäftigt sich daher mit dem Problem, für ein Verfahren zur Gewichtsanzeige bei einer Gewichtsmesseinrichtung sowie für eine solche Gewichtsmesseinrichtung verbesserte oder zumindest alternative Ausführungsformen anzugeben, die sich insbesondere durch eine genauere Gewichtsanzeige auszeichnen.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung basiert auf dem allgemeinen Gedanken, bei einer Gewichtsanzeige einer Gewichtsmesseinrichtung ein zuletzt bestimmtes Gewicht zu berücksichtigen, indem eine Korrektur der Anzeige des aktuell erfassten/bestimmten Gewichts abhängig vom zuletzt erfassten/bestimmten Gewicht vorgenommen wird. Auf diese Weise ist es möglich, das zuletzt bestimmte Gewicht bei der Anzeige des aktuellen Gewichts zu berücksichtigen und das aktuelle Gewicht möglichst genau anzuzeigen. Der erfindungsgemäße Gedanke ermöglicht es also, die Genauigkeit der Gewichtsanzeige zu verbessern und gleichzeitig eine starke Schwankung der Gewichtsanzeige bei aufeinanderfolgenden Gewichtsbestimmungen zu reduzieren. Dem Erfindungsgedanken entsprechend wird also mittels der Gewichtsmesseinrichtung zunächst eine erste Gewichtsmessung zur Bestimmung eines ersten Gewichts durchgeführt und das erste Gewicht angezeigt. Dabei wird das erste Gewicht für eine vorgegebene Zeitspanne gespeichert. Erfolgt nun eine zweite Gewichtsmessung innerhalb der vorgegebenen Zeitspanne, so findet ein Vergleich des ersten Gewichts und des durch die zweite Gewichtsmessung bestimmten zweiten Gewichts statt. Dabei wird eine Differenz zwischen dem zweiten Gewicht und dem ersten Gewicht gebildet. Liegt diese Differenz innerhalb einer Grenze, insbesondere einer vorgegebenen Grenze, so wird die Anzeige des zweiten Gewichts korrigiert. Das heißt, dass nach der zweiten Gewichtsmessung eine Summe aus dem zweiten Gewicht und einer Korrektur angezeigt wird. Hierbei hängt die Korrektur von der Differenz zwischen dem ersten Gewicht und dem zweiten Gewicht ab.

Zur Durchführung des erfindungsgemäßen Verfahrens weist eine zugehörige Gewichtsmesseinrichtung vorteilhaft eine Steuereinrichtung auf. Dabei ist die Steuereinrichtung derart ausgestaltet, insbesondere programmiert, dass sie das erfindungsgemäße Verfahren durchführen kann. Die Gewichtsmesseinrichtung weist vorteilhaft eine mit der Steuereinrichtung verbundene und/oder von der Steuereinrichtung gesteuerte Anzeigeeinrichtung oder kurz Anzeige auf, um ein Gewicht anzuzeigen. Dabei ist die Anzeige bei bevorzugten Varianten digital ausgestaltet, um eine möglichst genaue Anzeige des ermittelten Gewichts zu erlauben.

Die Abhängigkeit der Korrektur von der Differenz zwischen dem ersten Gewicht und dem zweiten Gewicht kann im Prinzip beliebig ausgestaltet sein. Vorteilhaft ist die Abhängigkeit derart realisiert, dass die Korrektur mit zunehmender Differenz zwischen dem zweiten Gewicht und dem ersten Gewicht zunimmt. Somit erfolgt eine verbesserte Berücksichtigung der Differenz bei der Gewichtsanzeige.

Dabei erfolgt die Korrektur, wie vorstehend erwähnt, nur dann, wenn die Differenz zwischen dem ersten Gewicht und dem zweiten Gewicht innerhalb der Grenze liegt. Auf diese Weise ist es möglich, bei einer großen Abweichung zwischen dem ersten Gewicht und dem zweiten Gewicht das zweite Gewicht wie bestimmt anzuzeigen, um eine möglichst genaue Anzeige des zweiten Gewichts zu erreichen.

Die Korrektur erfolgt bevorzugt derart, dass die Abweichung zwischen dem ersten Gewicht und dem zweiten Gewicht nicht verstärkt wird. Dies ist bei vorteilhaften Varianten derart realisiert, dass die Korrektur bei negativen Differenzen zwischen dem zweiten Gewicht und dem ersten Gewicht positiv ist. Das heißt, dass wenn das erste Gewicht größer ist als das zweite Gewicht, die Anzeige des zweiten Gewichts in Richtung des ersten Gewichts korrigiert wird. Umgekehrt ist es bevorzugt, wenn die Korrektur bei positiven Differenzen zwischen dem zweiten Gewicht und dem ersten Gewicht negativ ist. Mit anderen Worten, ist das zweite Gewicht größer als das erste Gewicht, so ist die Korrektur negativ.

Vorteilhaft ist es ferner, wenn die Korrektur kleiner ist also die Differenz zwischen dem ersten Gewicht und dem zweiten Gewicht. Somit wird gewährleistet, dass die Abweichung bzw. Differenz zwischen dem ersten Gewicht und dem zweiten Gewicht, die insbesondere durch Schwankungen des gleichen Gegenstandes, insbesondere Körpers, bedingt sein kann, durch die Korrektur nicht verstärkt wird.

Im Allgemeinen ist die Grenze für die Differenz zwischen dem zweiten Gewicht und dem ersten Gewicht, innerhalb derer eine Korrektur vorgenommen wird, beliebig. Diese Grenze kann insbesondere vorgegeben und fest sein. Bevorzugt sind jedoch Ausführungsformen, bei denen die Grenze vom ersten Gewicht abhängt. Auf diese Weise ist es möglich, die Korrektur an das erste Gewicht anzupassen. So ist es beispielsweise möglich, die Grenze bei niedrigeren ersten Gewichten kleiner und bei höheren ersten Gewichten größer zu machen. Demnach reicht bei einem kleineren ersten Gewicht eine kleinere Abweichung bzw. Differenz, um über die Grenze hinaus zu gelangen und eine Korrektur überflüssig zu machen, als bei einem höheren ersten Gewicht.

Alternativ oder zusätzlich ist es vorstellbar, ausgehend vom ersten Gewicht eine obere Grenze und eine untere Grenze zu bestimmen bzw. vorzugeben. Das heißt, dass für negative Differenzen zwischen dem zweiten Gewicht und dem ersten Gewicht eine untere Grenze gegeben sein kann, während für positive Differenzen zwischen dem zweiten Gewicht und dem ersten Gewicht eine obere Grenze gegeben sein kann. Somit wird eine verbesserte Genauigkeit der Gewichtsanzeige erreicht. Insbesondere ist es möglich, durch die Gewichtsmesseinrichtung gegebene Messtoleranzen genauer zu berücksichtigen.

Bevorzugt wird die Korrektur, wie vorstehend erläutert, mit abnehmender Differenz zwischen dem ersten Gewicht und dem zweiten Gewicht reduziert. Dabei ist es insbesondere vorstellbar, bei geringen Abweichungen bzw. Differenzen zwischen dem ersten Gewicht und dem zweiten Gewicht keine Korrektur vorzunehmen. Dies kann beispielsweise vorliegen, wenn die Differenz zwischen dem ersten Gewicht und dem zweiten Gewicht etwa 100 g beträgt. Auf diese Weise ist es möglich, bei geringen Differenzen zwischen dem ersten Gewicht und dem zweiten Gewicht diese geringe Differenz zu berücksichtigen. Als Beispiel hierfür kann eine Messsituation genannt werden, bei der eine zu wiegende Person nach der ersten Gewichtsbestimmung etwas trinkt.

Nimmt die Differenz zwischen dem ersten Gewicht und dem zweiten Gewicht zu, so wird die Korrektur entsprechend angepasst. Beträgt die Differenz beispielsweise 300 g, so erfolgt eine Korrektur der Anzeige des zweiten Gewichts um 100 g. Beträgt das erste Gewicht beispielsweise 85 kg und wird bei der zweiten Gewichtsmessung ein zweites Gewicht von 85,3 kg bestimmt, so erfolgt eine Anzeige von 85,1 kg.

Diese Tendenz nimmt vorteilhaft zu, bis die Differenz zwischen dem ersten Gewicht und dem zweiten Gewicht außerhalb der Grenze liegt.

Bei weiterhin zunehmender Differenz zwischen dem ersten Gewicht und dem zweiten Gewicht, wobei die Differenz innerhalb der Grenze liegt, ist es beispielsweise vorstellbar, das zweite Gewicht derart anzuzeigen, dass die Korrektur die Hälfte der Differenz zwischen dem ersten Gewicht und dem zweiten Gewicht beträgt. Beträgt das erste Gewicht beispielsweise 85 kg und wird bei der zweiten Gewichtsmessung ein zweites Gewicht von beispielsweise 85,6 kg bestimmt, so beträgt die Korrektur beispielsweise 300 g, d.h. dass nach der weiten Gewichtsmessung ein Gewicht von 85,3 kg angezeigt wird.

Bevorzugt sind ferner Varianten, bei denen das erste Gewicht für eine begrenzte Zeitspanne gespeichert wird. Das heißt, dass das erste Gewicht nicht dauerhaft gespeichert wird. Auf diese Art wird das erste Gewicht bei der Anzeige des zweiten Gewichts nicht berücksichtigt, sofern eine vorgegebene Zeitspanne zwischen der ersten Gewichtsbestimmung und der zweiten Gewichtsbestimmung liegt. Hierdurch wird der Einfluss des ersten Gewichts bei der Anzeige nach der zweiten Gewichtsmessung zeitlich begrenzt, so dass bei ausreichendem zeitlichem Abstand zwischen den Messungen jeweils das bestimmte Gewicht ohne Korrektur angezeigt wird. Auch hierdurch kann die Gewichtsanzeige nach der zweiten Gewichtsmessung möglichst genau erfolgen.

Zur Speicherung des ersten Gewichts für eine begrenzte Zeitspanne ist die Gewichtsmesseinrichtung, insbesondere die Steuereinrichtung, entsprechend ausgestaltet. Hierbei kann die Gewichtsmesseinrichtung insbesondere einen Kurzeitspeicher zum Speichern des ersten Gewichts aufweisen.

Bevorzugt sind ferner diejenigen Varianten, bei denen bei einer Gewichtsanzeige eines ermittelten Gewichts das jeweils zuletzt bestimmte Gewicht berücksichtigt wird, sofern die Differenz zwischen diesen zwei Gewichten innerhalb einer gegebenen Grenze liegt. Das heißt insbesondere, dass bei einer dritten Gewichtsmessung zur Bestimmung eines dritten Gewichts, aus dem zweiten Gewicht das erste Gewicht und aus dem dritten Gewicht das zweite Gewicht wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Draufsicht auf eine Gewichtsmesseinrichtung,
- Fig. 2: ein Diagramm zur Gewichtsanzeige der Gewichtsmesseinrichtung,
- Fig. 3: ein Flussdiagramm eines Verfahrens zur Gewichtsanzeige der Gewichtsmesseinrichtung.

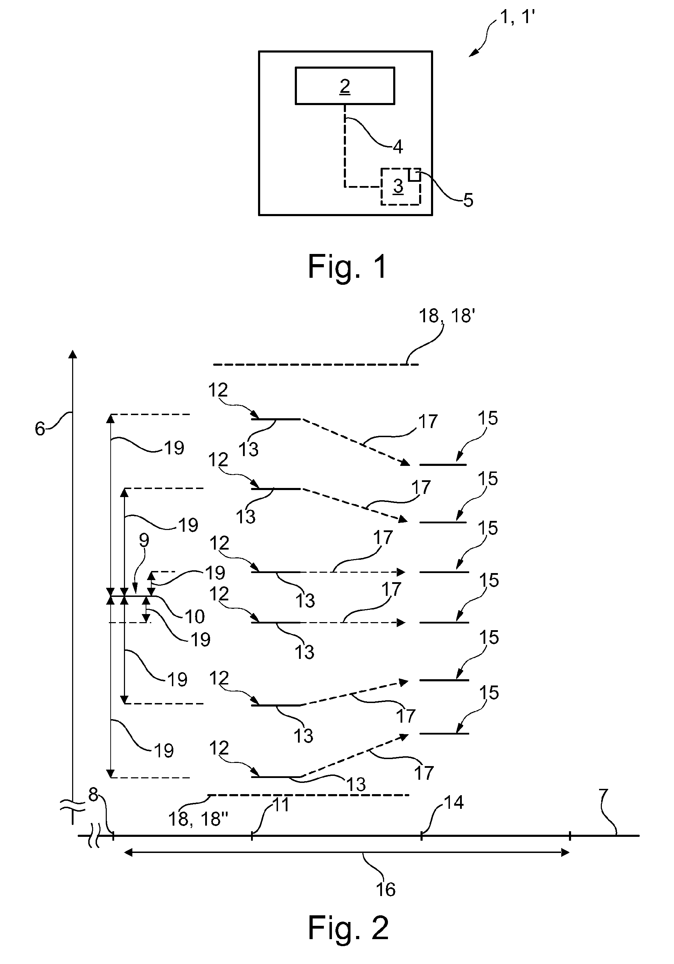

Fig. 1 zeigt eine Gewichtsmesseinrichtung 1, die als Personenwaage 1' ausgestaltet ist. Die Gewichtsmesseinrichtung 1 weist eine Anzeigeeinrichtung 2 auf, mit der ein Gewicht angezeigt werden kann. Die Gewichtsmesseinrichtung 1 weist ferner eine Steuereinrichtung 3 auf, die kommunizierend mit der Anzeigeeinrichtung 2 verbunden ist, wobei die kommunizierende Verbindung durch ein elektrisches Kabel 4 realisiert sein kann. Mithilfe der Gewichtsmesseinrichtung 1 können unterschiedliche Gewichte, beispielsweise Körpergewichte, bestimmt werden. Mit Hilfe der Anzeigeeinrichtung 2 werden Gewichte angezeigt. Dabei wird die Anzeigeeinrichtung 2 durch die Steuereinrichtung 3 gesteuert. Zudem ist die Steuereinrichtung 3 mit einem Kurzzeitspeicher 5 zur zeitlich befristeten Speicherung eines solchen Gewichtes ausgestattet.

Die Steuereinrichtung 3 ist derart ausgestaltet, insbesondere programmiert, dass sie das bestimmte Gewicht durch die Anzeigeeinrichtung 2 - wie in Fig. 2 schematisch dargestellt ist - anzeigt. In Fig. 2 sind zwei Achsen 6, 7 zu sehen. Dabei ist entlang der Ordinate 6 das Gewicht und entlang der Abszisse 7 die Zeit abgetragen, wobei die auf den Achsen 6, 7 zugeordneten Gewichtswerte bzw. Zeitwerte nicht absolut sind. Die Achsen 6, 7 sind daher unterbrochen dargestellt. Hierbei erfolgt zu einem ersten Zeitpunkt 8 eine erste Gewichtsmessung 9, bei der ein erstes Gewicht 10, beispielsweise 85 kg bestimmt wird. Zu einem zweiten Zeitpunkt 11 erfolgt eine zweite Gewichtsmessung 12, mit der ein zweites Gewicht 13 bestimmt wird, wobei in Fig. 2 eine Vielzahl solcher zweiten Gewichtsmessungen 12 bzw. zweiten Gewichte 13 dargestellt sind. Zu einem dritten Zeitpunkt 14 erfolgt eine Gewichtsanzeige 15 des zweiten Gewichts 13. Sofern die zweite Gewichtsmessung 12 und somit der zweite Zeitpunkt 11 innerhalb einer vorgegebenen, begrenzten Zeitspanne 16 nach dem ersten Zeitpunkt 8 liegt, wird durch die Steuereinrichtung 3 eine Korrektur 17 bestimmt, wenn das zweite Gewicht 13 nicht über eine vorgegebene Grenze 18 vom ersten Gewicht 10 abweicht. Dabei ist in Fig. 2 zu erkennen, dass für zweite Gewichte 13, die größer sind als das erste Gewicht 10 eine obere Grenze 18' gegeben ist, die beispielsweise 86 kg betragen kann. Zudem ist für zweite Gewichte 13 die kleiner sind als das erste Gewicht 10 eine untere Grenze 18" gegeben, die beispielsweise 84,2 kg betragen kann.

In Fig. 2 ist jedem zweiten Gewicht 13 eine solche Korrektur 17 sowie eine solche Anzeige 15 zugeordnet. Dabei ist zu erkennen, dass die einem solchen zweiten Gewicht 13 zugehörige Korrektur 17 von einer Differenz 19 zwischen dem jeweiligen zweiten Gewicht 13 und dem ersten Gewicht 10 abhängt. Dabei gilt, je größer die Differenz 19 ist, umso größer ist die Korrektur 17. Hierbei ist vorgesehen, dass bei kleinen Differenzen 19 die Korrektur 17 gleich null beträgt, wie dies bei den zweiten Gewichten 13 mit der kleinsten Differenz 19 zum ersten Gewicht 10 der Fall ist. Hier erfolgt also die Gewichtsanzeige 15 derart, dass das zweite Gewicht 13 angezeigt wird. Zudem ist zu erkennen, dass bei zweiten Gewichten 13, die kleiner als das erste Gewicht 10 sind, die zugehörige Korrektur 17 positiv ist, während für zweite Gewichte 13, die größer als das erste Gewicht 10 sind, die zugehörige Korrektur 17 negativ ist. Darüber hinaus erfolgen die Korrekturen 17 im gezeigten Beispiel symmetrisch. Das heißt, dass die Beträge der Korrekturen 17 für gleiche Beträge der Differenzen 19 gleich sind.

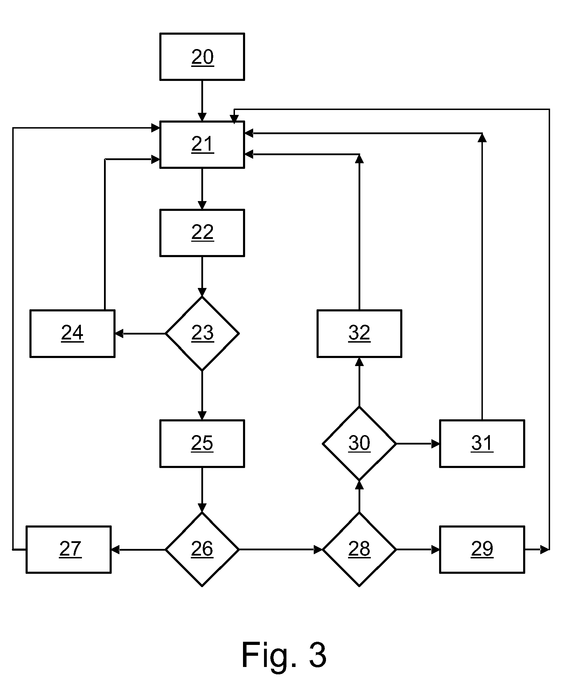

In Fig. 3 ist beispielshaft dargestellt, wie die Gewichtsmesseinrichtung 1, bzw. Steuereinrichtung 3 verfahren, um eine solche Gewichtsanzeige 15 zu erzeugen. In einem ersten Verfahrensschritt 20 erfolgt die erste Gewichtsmessung 9 zur Bestimmung des ersten Gewichts 10 sowie die Anzeige des ersten Gewichts 10 durch die Anzeigeeinrichtung 2. In einem zweiten Verfahrensschritt 21 wird das erste Gewicht 10 für die vorgegebene Zeitspanne 16, beispielsweise im Kurzzeitspeicher 5, gespeichert. Anschließend erfolgt in einem dritten Verfahrensschritt 22 die zweite Gewichtsmessung 12 zur Bestimmung des zweiten Gewichts 13. In einem anschließenden Verfahrensschritt 23 wird überprüft, ob die zweite Gewichtsmessung 12 innerhalb der Zeitspanne 16 nach der ersten Gewichtsmessung 9 erfolgt ist. Dies kann dadurch realisiert sein, dass überprüft wird, ob im Kurzzeitspeicher 5 ein Messwert gespeichert ist. Dies setzt voraus, dass die Speicherzeit im Kurzzeitspeicher 5 mit der Zeitspanne 16 korreliert. Erfolgte die zweite Gewichtsmessung 12 nicht innerhalb der zweiten Zeitspanne 16 nach der ersten Gewichtsmessung 9, so wird in einem Verfahrensschritt 24 in der Anzeigeeinrichtung 2 das zweite Gewicht 13 angezeigt.

Erfolgte die zweite Gewichtsmessung 12 innerhalb der Zeitspanne 16, so wird in einem Verfahrensschritt 25 die Differenz 19 zwischen dem ersten Gewicht 10 und dem zweiten Gewicht 13 ermittelt. Im anschließenden Verfahrensschritt 26 erfolgt ein Vergleich der Differenz 19 mit der Grenze 18, wobei hier zwischen der oberen Grenze 18' und der unteren Grenze 18" unterschieden wird. Liegt das zweite Gewicht 13 nicht innerhalb der Grenze 18, so erfolgt in einem Verfahrensschritt 27 die Anzeige des zweiten Gewichts 13 in der Anzeigeeinrichtung 2. Liegt das zweiten Gewicht 13 innerhalb der Grenze 18, so erfolgt die Korrektur 17. Dabei wird in einem Verfahrensschritt 28 bestimmt, ob das zweite Gewicht 13 und das erste Gewicht 10 sich um mehr als einen ersten vorgegebenen Wert, beispielsweise 100 g unterscheiden. Das heißt, dass bestimmt wird, ob die Differenz 19 kleiner oder größer als der erste vorgegebene Wert, insbesondere als 100 g, ist. Ist die Differenz 19 kleine als der erste vorgegebene Wert, so erfolgt im Verfahrensschritt 29 die Anzeige des zweiten Gewichts 13. Ist die Differenz 19 hingegen größer als der erste vorgegebene Wert, insbesondere als 100 g, so erfolgt in einem weiteren Verfahrensschritt 30 ein Vergleich der Differenz 19 mit einem zweiten vorgegebenen Wert, der beispielsweise 300 g betragen kann. Ist die Differenz 19 kleiner als der zweite vorgegebene Wert, insbesondere kleiner als 300 g, so erfolgt die Korrektur 17 in Höhe eines ersten vorgegebenen Korrekturwerts, beispielsweise 100 g. Daher erfolgt durch die Anzeigeeinrichtung 2 eine solche Gewichtsanzeige 15, die einer Summe aus dem zweiten Gewicht 13 und der zugehörigen Korrektur 17, insbesondere dem ersten Korrekturwert, also beispielsweise 100 g, entspricht.

Ist die Differenz 19 größer als der zweite vorgegebene Wert, so erfolgt eine zugehörige, Korrektur 17, durch einen zweiten Korrekturwert. Dabei beträgt der zweite Korrekturwert beispielsweise die Hälfte der zugehörigen Differenz 19. Das heißt, dass die Korrektur 17 bei einer Differenz 19 von 600 g nur 300 g beträgt. Dementsprechend wird im Verfahrensschritt 32 die Gewichtsanzeige 15 derart angesteuert, dass die Anzeigeeinrichtung 2 einen Wert anzeigt, die der Summe des zweiten Gewichts 13 und der zugehörigen Korrektur 17 mit dem zweiten Korrekturwert, also beispielsweise 300 g, entspricht.

Nach der jeweiligen Gewichtsanzeige 15 des zweiten Gewichts 13 bzw. der Summe des zweiten Gewichts 13 und der Korrektur 17 kehrt das Verfahren zum Verfahrensschritt 21 zurück und speichert das zweite Gewicht 13 für die Zeitspanne 16 im Kurzzeitspeicher 5. Das heißt, dass das zweite Gewicht 13 für eine dritte, hier nicht gezeigte Gewichtsmessung zur Bestimmung eines dritten, hier nicht gezeigten Gewichts, als erstes Gewicht 10 dient, während diese dritte Gewichtsmessung, bzw. das dritte Gewicht die Rolle der zweiten Gewichtsmessung 12 bzw. des zweiten Gewichts 13 einnehmen.

Im gezeigten Beispiel erfolgt die Korrektur 17 also in drei Stufen und symmetrisch (vgl. Fig. 2). Dabei ist es selbstverständlich möglich, das Verfahren mit mehr oder weniger Stufen zu realisieren. Auch ist es möglich, die Korrektur 17 asymmetrisch zu realisieren. In diesem Fall unterscheidet sich bei gleichen Beträgen der Differenz 19 für zwei zweite Gewichte 13, der Betrag der Korrektur 17 beim zweiten Gewicht 13, das größer ist als das erste Gewicht 10, vom Betrag der Korrektur 17 des zweiten Gewichts 13, das kleiner ist als das erste Gewicht 10.

### Bezugszeichenliste

- 1: Gerichtsmesseinrichtung
- 1': Körperwaage
- 2: Anzeigeeinrichtung
- 3: Steuereinrichtung
- 4: Kabel
- 5: Kurzzeitspeicher
- 6: Gewichtsachse
- 7: Zeitachse
- 8: erster Zeitpunkt
- 9: erste Gewichtsmessung
- 10: erstes Gewicht
- 11: zweiter Zeitpunkt
- 12: zweite Gewichtsmessung
- 13: zweites Gewicht
- 14: dritter Zeitpunkt
- 15: Gewichtsanzeige
- 16: Zeitspanne
- 17: Korrektur
- 18: Grenze
- 18': obere Grenze
- 18": untere Grenze
- 19: Differenz
- 20 bis 32: Verfahrensschritte

## Patentansprüche

1. Verfahren zur Gewichtsanzeige (15) bei einer Gewichtsmesseinrichtung (1), insbesondere bei einer Körperwaage (1'), wobei
- bei einer ersten Gewichtsmessung (9) zur Bestimmung eines ersten Gewichts (10), das erste Gewicht (10) angezeigt und für eine vorgegebene Zeitspanne (16) gespeichert wird,
- bei einer zweiten Gewichtsmessung (12) innerhalb der vorgegebenen Zeitspanne (16) nach der ersten Gewichtsmessung (9), das erste Gewicht (10) mit einem durch die zweite Gewichtsmessung (12) bestimmten zweiten Gewicht (13) verglichen wird,
- eine Differenz (19) der beiden Gewichte (10, 13) ermittelt wird,
- bei einer Differenz (19) des zweiten Gewichts (13) zum ersten Gewicht (10) innerhalb einer vordefinierten Grenze (18), eine Summe aus dem zweiten Gewicht (13) und einer Korrektur (17) angezeigt wird,
- die Korrektur (17) von der Differenz (19) zwischen dem zweiten Gewicht (13) und dem ersten Gewicht (10) abhängt.

2. Verfahren nach Anspruch 1, **dadurch gekennzeichnet, dass** die Korrektur (17) bei negativen Differenzen (19) zwischen dem zweiten Gewicht (13) und dem ersten Gewicht (10) positiv ist, und dass die Korrektur (17) bei positiven Differenzen (19) zwischen dem zweiten Gewicht (13) und dem ersten Gewicht (10) negativ ist.

3. Verfahren nach Anspruch 1 oder 2, **dadurch gekennzeichnet, dass** für negative Differenzen (19) zwischen dem zweiten Gewicht (13) und dem ersten Gewicht (10) eine untere Grenze (18") festgelegt wird, und für positive Differenzen (19) zwischen dem zweiten Gewicht (13) und dem ersten Gewicht (10) eine obere Grenze (18') festgelegt wird.

4. Verfahren nach einem der Ansprüche 1 bis 3, **dadurch gekennzeichnet, dass** die Grenzen (18) abhängig vom ersten Gewicht (10) bestimmt werden.

5. Verfahren nach einem der Ansprüche 1 bis 4, **dadurch gekennzeichnet, dass** bei einer Differenz (19) von +/- 100 g das zweite Gewicht (13) angezeigt wird.

6. Verfahren nach einem der Ansprüche 1 bis 5, **dadurch gekennzeichnet, dass** bei einer Differenz (19) von größer als +/- 300 g das zweite Gewicht (13) um +/- der Hälfte der ermittelten Differenz (19) angepasst und angezeigt wird.

7. Verfahren nach einem der Ansprüche 1 bis 6, **dadurch gekennzeichnet, dass** bei einer dritten Gewichtsmessung zur Bestimmung eines dritten Gewichts, aus dem zweiten Gewicht (13) das erste Gewicht (10) und aus dem dritten Gewicht das zweite Gewicht (13) wird.

8. Gewichtsmesseinrichtung (1), insbesondere Körperwaage (1'), mit einer Anzeigeeinrichtung (2) zum Anzeigen von Gewichten und einer Steuereinrichtung (2), wobei die Steuereinrichtung (2) derart ausgestaltet ist, dass sie das Verfahren gemäß einem der Ansprüche 1 bis 7 durchführt.

9. Gewichtsmesseinrichtung nach Anspruch 8, **dadurch gekennzeichnet, dass** die Gewichtsmesseinrichtung (1) einen Kurzzeitspeicher (5) zum Speichern des ersten Gewichts (10) aufweist.
